# FASCICULE DE BREVET EUROPEEN

(11) **EP 2 715 476 B1**
(45) Date de publication et mention de la délivrance du brevet: **17.04.2019**
(21) Numéro de dépôt: 12731074.6
(22) Date de dépôt: 25.05.2012
(51) Int. Cl.: G06F 1/16, A45C 13/02, A45C 11/00

(54) **STRUCTURE COMPORTANT UNE MALLETTE ET UN SOCLE RAPPORTE POUR LE TRANSPORT ET L'UTILISATION D'UN ÉQUIPEMENT MULTIMEDIA PORTABLE**
STRUKTUR MIT EINEM GEHÄUSE UND BEFESTIGTEM STÄNDER FÜR DEN TRANSPORT UND DIE VERWENDUNG VON TRAGBAREN MULTIMEDIAGERÄTEN
STRUCTURE COMPRISING A CASE AND AN ATTACHED STAND FOR TRANSPORTING AND USING PORTABLE MULTIMEDIA EQUIPMENT

(30) Priorité: 27.05.2011 FR 1154627; 25.05.2012 FR 1254863
(43) Date de publication de la demande: 09.04.2014
(73) Titulaire: Klein, Thierry, 59830 Bachy (FR)
(72) Inventeur: Klein, Thierry, 59830 Bachy (FR)
(74) Mandataire: Matkowska, Franck
(86) Numéro de dépôt international: PCT/FR2012/051187
(87) Numéro de publication internationale: WO 2012/168624

(56) Documents cités:
- WO-A1-2004/081773
- DE-A1-102007 044 327
- FR-A1- 2 935 087
- US-B1- 6 229 698

## Description

### Domaine technique

La présente invention se rapporte au domaine du transport et de l'utilisation d'un équipement portable multimédia permettant la diffusion d'informations audiovisuelles. Cet équipement portable multimédia comporte par exemple une unité centrale de type microordinateur portable, et un ou plusieurs périphériques pour l'affichage d'informations audiovisuelles, tels que par exemple un vidéoprojecteur et/ou des tablettes multimédia ou équivalent. Dans ce domaine, l'invention a pour objet une nouvelle structure qui est adaptée pour le transport et l'utilisation d'un équipement multimédia portable.

### Art antérieur

Dans le cadre de conférences, dans les domaines des affaires, de l'enseignement, ou encore de la formation, des moyens multimédia sont couramment utilisés afin de rendre l'objet de l'exposé plus facilement compréhensible et/ou plus attractif pour l'auditoire et/ou le cas échéant interactif avec l'auditoire.

Ces moyens multimédia comportent le plus souvent une unité centrale informatique, par exemple de type microordinateur portable, et un ou plusieurs périphériques permettant la restitution pour l'auditoire des informations audiovisuelles délivrées par l'unité centrale informatique. Ces périphériques peuvent par exemple comporter un vidéo projecteur et du matériel audio tel qu'un microphone et des hauts parleurs, et/ou des tablettes multimédia ou équivalent pouvant communiquer à distance et sans fil avec l'unité centrale informatique.

Il existe à ce jour des structures qui sont adaptées pour le transport et l'utilisation d'un équipement multimédia portable. Par exemple, une structure connue et commercialisée à ce jour comporte une mallette de rangement et de transport comprenant une coque rigide sur laquelle est fixé un plateau support, qui est articulé par rapport à la coque au moyen de charnières. Ce plateau sert de support par exemple à une unité centrale informatique, par exemple de type micro ordinateur portable, et à un vidéoprojecteur.

Ce type de structure est intéressant car il permet à la fois le transport de l'équipement multimédia portable et un déploiement rapide de cet équipement multimédia portable lors de son utilisation.

Cependant dans ce type de structure, un format de plateau correspond à un seul modèle de mallette de rangement et de transport, ce qui rend la fabrication contraignante et peu flexible. En outre la liaison mécanique par charnière entre le plateau et la mallette complique l'assemblage de ces deux éléments et augmente les coûts de production de la structure.

Par ailleurs, dans ce type connu de structure, le volume sous le plateau est utilisé comme volume de rangement par exemple pour loger les moyens d'alimentation électriques, de type transformateur, de l'unité centrale informatique et du vidéoprojecteur. Lorsque l'utilisateur de la structure doit mettre en oeuvre ces moyens d'alimentation électrique, il doit faire pivoter le plateau supportant l'unité centrale informatique, et le cas échéant le vidéoprojecteur, pour accéder à ces moyens d'alimentation électrique, puis doit retirer ces moyens d'alimentation électrique de la mallette et les connecter à l'unité centrale informatique et au vidéoprojecteur après avoir remis en place le plateau support. A l'inverse, une fois l'utilisation de l'équipement multimédia achevée, l'utilisateur doit déconnecter les moyens d'alimentation électrique, puis doit faire pivoter le plateau afin d'accéder au volume de rangement sous le plateau et permettre le rangement des moyens d'alimentation électrique. Ces opérations sont relativement fastidieuses. En outre, en fin d'utilisation, l'unité centrale et le vidéoprojecteur ont généralement chauffé. Il n'est donc pas recommandé de les manipuler, ce qui oblige en pratique l'utilisateur à attendre le refroidissement des ces éléments avant de pourvoir manipuler le plateau support articulé et permettre le rangement des moyens d'alimentation électrique.

On a également proposé dans le brevet américain US 6 229 698 une structure pour le transport et l'utilisation d'un équipement portable multimédia. Cette structure met en oeuvre un plateau rapporté supporté par des pieds, et positionnable sur support adapté monté à l'intérieur d'un compartiment d'une valise de transport. Ledit support comporte notamment des ressorts hélicoïdaux. D'une part le plateau rapporté est adapté à un unique format de valise, et la fabrication de la valise de transport, avec notamment son support à ressort hélicoïdaux, est complexe. D'autre part, le support à ressort hélicoïdaux n'est pas optimal pour absorber des chocs, et ne permet pas notamment d'absorber des chocs autres que des chocs latéraux orientés suivant l'axe longitudinal des ressorts. WO2004/081773 A1 et DE 10 2007 044327 A1 décrivent d'autres structures pour le transport et l'utilisation d'un équipement portable multimédia.

### Objectifs de l'invention

Un objectif principal de l'invention est de proposer une nouvelle structure pour le transport et l'utilisation d'un équipement portable multimédia, qui permet une mise en oeuvre rapide et aisée de l'équipement multimédia, et dont la fabrication est moins contraignante et plus flexible que la fabrication des structures précitées de l'art antérieur.

Un objectif subsidiaire de l'invention est de proposer une nouvelle structure pour le transport et l'utilisation d'un équipement portable multimédia, qui permet une meilleure absorption des chocs.

### Résumé de l'invention

Cet objectif est atteint au moyen d'une structure pour le transport et l'utilisation d'un équipement portable multimédia présentant les caractéristiques techniques suivantes. La structure comporte d'une part une mallette comprenant deux parties, l'une au moins des deux parties formant une coque de rangement qui comporte une paroi de fond entourée sur toute sa périphérie par une paroi latérale, la face interne de la paroi de fond et ladite paroi latérale délimitant un volume de rangement, l'autre partie de la mallette formant un couvercle positionnable en position fermée sur la paroi latérale de la coque de rangement (20) de manière à fermer le volume de rangement de la coque de rangement, et d'autre part au moins un socle rapporté comportant une embase et un plateau (31) qui est surélevé par rapport à l'embase de manière à ménager un volume de rangement sous le plateau ; le socle est dimensionné de telle sorte que son embase peut être posée au contact de la face interne de la paroi de fond de la coque de rangement et que la coque de rangement peut être fermée par l'autre partie de la mallette formant couvercle, une fois le socle positionné dans la coque de rangement.

De manière facultative, la structure de l'invention peut comporter les caractéristiques techniques additionnelles suivantes, prises isolément ou en combinaison les unes avec les autres :
- Le socle comporte au moins une ouverture pour le passage d'une ou plusieurs liaisons filaires à travers le plateau.
- Le plateau du socle comporte au moins une ouverture obturable par une trappe d'accès et permettant d'accéder sous le plateau.
- Le plateau comporte un renfoncement central, dans lequel sont ménagées une ou plusieurs ouvertures pour le passage d'une ou plusieurs liaisons filaires à travers le plateau.
- La profondeur du renfoncement est telle que la paroi de fond du renfoncement est située sensiblement au même niveau que l'embase du socle.
- L'embase est prolongée sur sa périphérie par une paroi latérale qui est orientée sensiblement transversalement à l'embase, et qui se prolonge par le plateau, ladite paroi latérale raccordant le plateau à l'embase sur la périphérie du plateau.
- le plateau comporte une pluralité de fentes de rangement permettant l'insertion dans le plateau d'éléments multimédia du type tablettes numériques.
- Ledit au moins un socle comporte une pièce monobloc formant au moins ladite embase et le plateau, et le cas échéant ladite paroi latérale.
- Le socle comporte une pièce moulée en plastique ou en élastomère formant au moins ladite embase et le plateau, et le cas échéant ladite paroi latérale.
- la pièce monobloc ou la pièce moulée en plastique ou en élastomère du socle est laminée, sur au moins une face et de préférence sur ses deux faces, avec un revêtement textile, et plus particulièrement un revêtement textile de type velours.
- La structure comporte en outre des moyens de fixation permettant de fixer de manière amovible le socle dans la coque de rangement.
- Les deux parties de la mallette comportent des moyens de fermeture permettant de solidariser en position fermée la partie de la mallette formant couvercle avec la partie de la mallette formant coque de rangement.
- Les moyens de fermeture de la mallette comportent une fermeture à glissière.
- Les deux parties de la mallette sont désolidarisables complètement l'une de l'autre.
- La fermeture à glissière comporte une première bande de fermeture à glissière, qui est fixée au niveau du bord supérieur de la paroi latérale de la coque de rangement sur quasiment sur toute la périphérie de la coque de rangement, à l'exception d'une portion de faible longueur, ; l'autre partie de la mallette formant couvercle comporte une deuxième bande de fermeture à glissière qui est complémentaire de la première bande de fermeture à glissière, qui est fixée au niveau du bord supérieur de la paroi latérale de la partie formant couvercle sur quasiment sur toute la périphérie la partie formant couvercle, à l'exception d'une portion de faible longueur et au moins un curseur mobile le long des bandes de fermeture à glissière de manière à solidariser ensemble ou à désolidariser les deux bandes de fermeture à glissière.
- Les deux bandes de fermeture à glissière comportent au niveau d'au moins une de leurs deux extrémités, et de préférence au niveau de chacune de leurs deux extrémités, une portion extrémale de faible longueur, qui est libre et n'est pas fixée à la partie correspondante de la mallette.
- La structure comporte en outre une pièce qui permet de former une liaison charnière entre les deux parties de la mallette et qui est séparable de l'une des deux parties de la mallette.
- Le socle est positionné et est fixé dans la coque de rangement de la mallette.
- Le plateau du socle est positionné à proximité du bord supérieur de la de la paroi latérale de la coque de rangement.
- Une ou plusieurs liaisons filaires, et plus particulièrement un ou plusieurs câbles d'alimentation électrique ou un ou plusieurs câbles de connexion électrique, sont passés à travers le plateau du socle.
- La structure comporte une source d'alimentation électrique de type transformateur de courant alternatif en courant continu, positionnée sous le plateau du socle.
- la mallette est conçue de telle sorte qu'une fois la mallette fermée, il subsiste une ouverture entre les deux parties de la mallette pour le passage d'un câble d'alimentation électrique.
- l'embase est prolongée sur sa périphérie par une paroi latérale qui est orientée sensiblement transversalement à l'embase, et qui se prolonge par le plateau, ladite paroi latérale raccordant le plateau à l'embase sur la périphérie du plateau, la jonction entre la paroi latérale et l'embase et la jonction entre la paroi latérale et le plateau étant élastiquement déformables de manière à absorber les chocs latéraux.
- l'embase est située à l'extérieur par rapport au plateau.
- le plateau est élastiquement déformable sous l'effet d'une contrainte mécanique appliquée perpendiculairement au plateau, de manière à permettre une suspension élastique d'un objet posé sur le plateau.
- le socle comporte une pièce monobloc en éthylène-acétate de vinyle (EVA).
- le socle comporte une pièce monobloc en éthylène-acétate de vinyle (EVA).élastomère.
- le socle comporte une pièce monobloc réalisée dans un matériau présentant un module de Young compris entre 0,001 GPa et 0,1 GPa, et de préférence entre 0,015 GPa et 0,08 GPa.
- le plateau du socle est pourvu d'une ou plusieurs sangles de fixation.

Un mode de réalisation de l'invention a également pour objet un ensemble comportant un équipement multimédia et la structure susvisée pour le transport et l'utilisation de cet équipement portable multimédia. Dans cet ensemble, le socle de la structure est positionné et est fixé dans la coque de rangement de la mallette, et dans lequel l'équipement multimédia comporte une unité centrale informatique de type microordinateur portable, qui est posée sur le plateau du socle et un ou plusieurs périphériques qui sont supportés par le socle.

De manière facultative, ledit ensemble de l'invention peut comporter les caractéristiques techniques additionnelles suivantes, prises isolément ou en combinaison les unes avec les autres :
- L'unité centrale informatique est connectée à travers le plateau à une source d'alimentation électrique positionnée sous le plateau du socle.
- L'un des périphériques est un vidéoprojecteur qui est posé sur le plateau du socle, et qui est de préférence connecté à l'unité centrale informatique.
- au moins une partie des périphériques est constitué d'éléments multimédia individuels de type tablettes numériques ou téléphones, qui sont aptes à communiquer à distance et sans fil avec l'unité centrale informatique.

Un mode de réalisation de l'invention a également pour objet une mallette ayant la structure susvisée pour le transport et l'utilisation d'un équipement portable multimédia. Ladite mallette comprend deux parties, l'une au moins des deux parties formant une coque de rangement délimitant volume de rangement et l'autre partie de la mallette formant un couvercle positionnable en position fermée sur la coque de rangement de manière à fermer le volume de rangement de la coque de rangement ; les deux parties de la mallette comportent une fermeture à glissière qui permet de solidariser en position fermée la partie de la mallette formant couvercle avec la partie de la mallette formant coque de rangement, et qui est conçue de manière à permettre une désolidarisation complète des deux parties de la mallette.

De manière facultative, cette mallette peut comporter les caractéristiques techniques additionnelles suivantes, prises isolément ou en combinaison les unes avec les autres :
- Les deux parties de la mallette comportent des moyens de fermeture permettant de solidariser en position fermée la partie de la mallette formant couvercle avec la partie de la mallette formant coque de rangement.
- Les moyens de fermeture de la mallette comportent une fermeture à glissière.
- La fermeture à glissière comporte une première bande de fermeture à glissière, qui est fixée au niveau du bord supérieur de la paroi latérale de la coque de rangement sur quasiment toute la périphérie de la coque de rangement, à l'exception d'une portion de faible longueur, ; l'autre partie de la mallette formant couvercle comporte une deuxième bande de fermeture à glissière qui est complémentaire de la première bande de fermeture à glissière, qui est fixée au niveau du bord supérieur de la paroi latérale de la partie formant couvercle sur quasiment sur toute la périphérie la partie formant couvercle, à l'exception d'une portion de faible longueur et au moins un curseur mobile le long des bandes de fermeture à glissière de manière à solidariser ensemble ou à désolidariser les deux bandes de fermeture à glissière.

- Les deux bandes de fermeture à glissière comportent au niveau d'au moins une de leurs deux extrémités, et de préférence au niveau de chacune de leurs deux extrémités, une portion extrémale de faible longueur, qui est libre et n'est pas fixée à la partie correspondante de la mallette.
- La structure comporte en outre une pièce qui permet de former une liaison charnière entre les deux parties de la mallette et qui est séparable de l'une des deux parties de la mallette.
- la mallette est conçue de telle sorte qu'une fois la mallette fermée, il subsiste une ouverture entre les deux parties de la mallette pour le passage d'un câble d'alimentation électrique.

### Brève description des figures

Les caractéristiques et avantages de l'invention ressortiront plus clairement à la lecture de la description détaillée qui suit de plusieurs variantes particulières de réalisation, laquelle description est faite, à titre d'exemple non limitatif et non exhaustif de l'invention, et en référence aux dessins annexés parmi lesquels :
- La figure 1 est une vue éclatée d'une première variante de réalisation d'un équipement portable multimédia et d'une structure de transport et d'utilisation de cet équipement, seule la partie formant coque de rangement de cette structure étant représentée, et l'autre partie formant couvercle n'étant pas représentée.
- La figure 2 est une vue de dessus montrant les deux éléments multimédia principaux (microordinateur portable et vidéoprojecteur) de l'équipement multimédia portable, posés sur le plateau du socle de la structure, ledit socle étant positionné dans la coque de rangement de la structure.
- La figure 3 est une vue schématique en coupe transversale de la structure et de l'équipement multimédia lors de la mise en place de la partie formant couvercle sur la partie formant coque de rangement.
- La figure 4 montre une deuxième variante de réalisation d'un socle de l'invention.
- La figure 5 montre une troisième variante de réalisation d'un socle de l'invention.
- La figure 6 montre un équipement portable multimédia rangé sur le socle de la figure 5.
- Les figures 7 et 8 montrent un exemple de mallette.
- La figure 9 représente la mallette des figures 7 et 8, une fois les deux parties de la mallette complètement désolidarisées l'une de l'autre.
- Les figures 10 et 11 montrent une pièce souple pouvant être utilisée pour former une charnière entre les deux parties de la mallette.
- Les figures 12 et 13 montrent la mallette fermée et un câble d'alimentation électrique sortant de la mallette en étant passé à travers une ouverture ménagée entre les deux parties de la mallette.
- Les figures 14 et 15 montrent une quatrième variante de réalisation et de mise en oeuvre d'un double socle de l'invention.
- La figure 16 représente de manière schématique la déformation élastique d'un socle de l'invention sous l'effet d'un choc latéral.
- La figure 17 représente de manière schématique la déformation élastique d'un socle de l'invention sous l'effet d'une contrainte mécanique verticale.

### Description détaillée

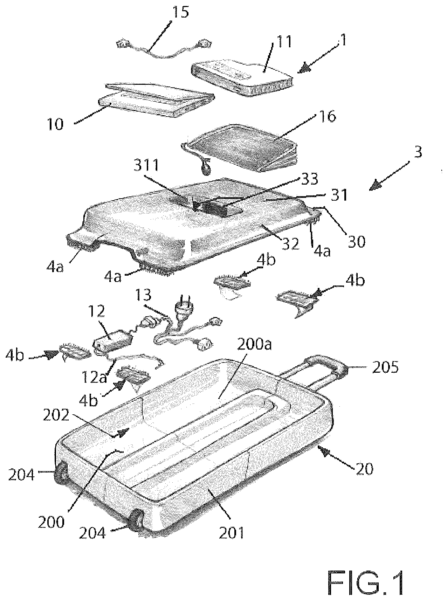

On a représenté sur la variante particulière des figures 1 à 3 un équipement multimédia portable 1 et une structure conforme à l'invention qui permet le transport et l'utilisation de cet équipement portable multimédia.

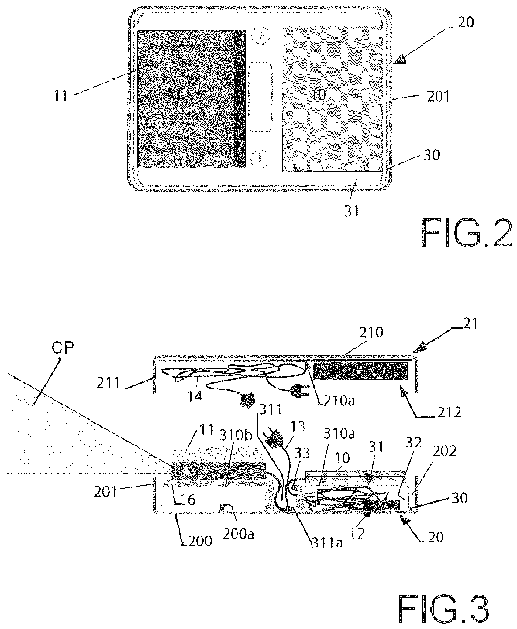

Dans cet exemple particulier, l'équipement multimédia portable 1 comporte:
- une unité centrale informatique portable 10 de type microordinateur portable,
- un vidéoprojecteur 11,
- une source d'alimentation électrique 12, de type transformateur de courant alternatif en courant continu, comportant un câble d'alimentation électrique 12a apte à être connecté au microordinateur portable 10,
- un câble de raccordement électrique 13, de type multiprise, raccordé à la source d'alimentation électrique 12 et une ou plusieurs rallonges électriques 14 (figure 3) permettant de raccorder au secteur électrique le câble de raccordement électrique 13,
- un câble 15 de type câble VGA pour le raccordement du vidéoprojecteur 11 au microordinateur potable 10.

Dans cet exemple particulier de réalisation, l'équipement multimédia comporte également un coussin gonflable 16 pour le réglage de la hauteur et/ou de l'inclinaison du vidéoprojecteur 11.

La structure pour le transport et l'utilisation de cet équipement portable multimédia comporte :
- une mallette 2 en deux parties 20, 21,
- un socle rapporté 3
- Des moyens 4a, 4b de fixation de ce socle dans la partie 20 de la mallette 2.

La première partie 20 de la mallette 2 forme une coque de rangement, de préférence rigide, comportant une paroi de fond 200 entourée sur toute sa périphérie par une paroi latérale 201, la face interne 200a de la paroi de fond et ladite paroi latérale 201 délimitant un volume de rangement 202.

Dans cet exemple particulier, et de manière optionnelle selon l'invention, cette première partie 20 de la mallette 2 est également équipée de roulettes 204 et d'une poignée 205 télescopique. Par soucis de simplification, les roulettes 204 et la poignée 205 ne sont pas représentées sur les figures 2 et 3.

La deuxième partie 21 de la mallette 2 forme un couvercle et est positionnable sur la paroi latérale 201 de la première partie 20 de manière à fermer le volume de rangement 202 de la première partie 20. Les deux parties 20 et 21 de la mallette 2 sont en outre équipées de moyens de fermeture, par exemple de type fermeture à glissière, qui permettent de facilement solidariser temporairement les deux parties 20, 21 l'une part rapport à l'autre.

Dans la variante de la figure 3, et de manière facultative selon l'invention, la deuxième partie 21 de la mallette 2 forme également une coque de rangement, de préférence rigide, comportant une paroi de fond 210 entourée sur toute sa périphérie par une paroi latérale 211, la face interne 210a de la paroi de fond et ladite paroi latérale 211 délimitant un volume de rangement 212.

Le socle 3 comporte une embase 30 et un plateau 31 qui est surélevé par rapport à l'embase 30 de manière à ménager un volume de rangement sous le plateau. Le socle 3 comporte également au moins une ouverture 33, pour le passage d'une ou plusieurs liaisons filaires à travers le plateau 31.

Plus particulièrement, en référence à la variante particulière de figure 1, l'embase 30 est prolongée sur toute sa périphérie par une paroi latérale 32 qui est orientée sensiblement transversalement à l'embase 30, et qui se prolonge par le plateau 31 de plus faibles dimensions que l'embase 30. Cette paroi latérale 32 raccorde ainsi le plateau 31 à l'embase 30 sur toute la périphérie du plateau 31 et permet ainsi de surélever le plateau 31 par rapport à l'embase 30, laquelle l'embase 30 est située à l'extérieur par rapport au plateau 31.

Le socle 3 est dimensionné de telle sorte que son embase 30 peut être posée au contact de la face interne 200a de la paroi de fond 200 de la coque de rangement 20 et la coque de rangement 20 peut être fermée par l'autre partie 21 de la mallette une fois le socle 3 positionné dans la coque de rangement 20 (figure 3).

Dans la variante particulière des figures 1 à 4, le plateau 31 comporte un renfoncement central 311, dans lequel sont ménagées les ouvertures 33 pour le passage d'une ou plusieurs liaisons filaires à travers le plateau 31. Ce renfoncement permet de rigidifier le plateau 31 du socle 3.

De préférence, tel qu'illustré sur la figure 3, la profondeur de ce renfoncement 311 est telle que la paroi de fond 311a du renfoncement 311 est située sensiblement au même niveau que l'embase 30. Il en résulte qu'une fois le socle 3 posé contre la face interne 200a de la paroi de fond 200 de la coque de rangement 20, le socle 3 est au contact de la paroi de fond 200 de la coque de rangement 20, non seulement par l'intermédiaire de l'embase 30, mais également par l'intermédiaire de la paroi de fond 311a du renfoncement 311, ce qui permet de renforcer la solidité au socle 3 et éviter une déformation trop importante du plateau 31 sous le poids des éléments multimédia 10, 11 de l'équipement.

Le socle 3 des figures annexées est une pièce monobloc, et plus particulièrement une pièce moulée en plastique ou en élastomère. Dans une autre variante, ladite pièce monobloc peut être laminée, de préférence sur ses deux faces, avec un revêtement textile lui conférant un toucher plus agréable, et de préférence avec un revêtement en velours formant une surface d'accrochage de type bouclettes pour des attaches à crochets de type VELCRO®.

En référence à la figure 1, les moyens de fixation 4a, 4b du socle 3 par rapport à la paroi de fond 200 de la coque de rangement 20 sont constitués par des moyens de fixation rapide de type à crochets et bouclettes, plus communément désignés VELCRO®. En particulier, ces moyens de fixation comportent d'une part des premières pattes de fixation 4a, de type à bouclettes et/ou crochets, fixées par exemple par collage sous l'embase 30 du socle 3, et des deuxièmes pattes de fixation 4b de type à bouclettes et/ou crochets, fixées par exemple par collage sur la face interne 200a de la paroi de fond 200 et aptes à coopérer avec les premières pattes de fixation 4a du socle 3.

Ces moyens de fixation 4a, 4b peuvent être remplacés par tout moyen de fixation permettant une fixation rapide du socle 3 sur la paroi de fond 200. La fixation du socle 3 peut être réalisée à l'aide de moyens de fixation 4a, 4b qui permettent, comme dans le cas des figures annexées, de retirer rapidement le socle 3. Cependant, dans le cadre de l'invention, la fixation du socle 3 peut également être réalisée de manière à être définitive, par exemple en rivetant le socle 3 avec la coque de rangement 20, le socle 3 n'étant pas nécessairement amovible ou étant difficilement amovible par rapport à coque de rangement 20.

En référence à la figure 3, le socle 3 est posé et fixé sur la paroi de fond 200 de la coque de rangement 20, et le plateau 31 forme de part et d'autre de son renfoncement central 310, deux support plans 310a et 310b.

Le microordinateur portable 10 est posé, et est de préférence fixé de manière amovible par tout moyen connu (par exemple par des attaches de type VELCRO®) sur le support plan 310a du plateau 31.

Le vidéoprojecteur 11 est posé, et est de préférence fixé de manière amovible par tout moyen connu (par exemple par des attaches de type VELCRO®) sur l'autre support plan 310b du plateau 31. De préférence, dans cette variante, le coussin gonflable 16 pour le réglage de la hauteur et/ou de l'inclinaison du vidéoprojecteur 11 est interposé entre le vidéoprojecteur 11 et le support plan 310b du plateau 31.

La source d'alimentation électrique transformée 12 est logée sous le plateau 31. Le câble d'alimentation électrique 12a est passé à travers l'une des ouvertures 33 du socle 3 et est raccordé au microordinateur portable 10. Le câble de raccordement électrique 13, de type multiprise, est raccordé sous le plateau 31 à la source d'alimentation électrique 12 et est également passé à travers au moins l'une des ouvertures 33 du socle 3, de sorte que les multiprises de ce câble 13 sont connectées, sous le plateau, aux éléments devant être alimentés (tels que le vidéoprojecteur 11). La rallonge électrique 14 (figure 3) qui permet de raccorder au secteur électrique le câble de raccordement électrique 13 est logée dans l'autre coque de rangement 21 de la mallette 2.

De préférence, le vidéoprojecteur 11 est connecté au microordinateur portable 10 au moyen du câble 15 de type câble VGA.

Pour le transport de l'équipement multimédia 10, 11 pré-connecté, la mallette 2 est fermée. Pour utiliser cet équipement multimédia 10, 11, il suffit à l'utilisateur d'ouvrir la mallette 2 en séparant la partie 21 formant couvercle de la partie 20 contenant l'équipement multimédia 10, 11 pré-connecté, de raccorder la rallonge électrique 14, d'un côté à une prise du câble de raccordement électrique 13, et de l'autre coté au secteur électrique de manière à alimenter électriquement le microordinateur portable 10 et le vidéoprojecteur 11. Eventuellement l'utilisateur peut également régler la hauteur de projection au moyen du coussin gonflable 16 placé sous le vidéoprojecteur 11. L'équipement multimédia est ainsi rapidement prêt pour son utilisation sans autres manipulations de la part de l'utilisateur.

En référence à la figure 3, on notera que le socle 3 est de préférence logé complètement dans la coque de rangement 20, le plateau 31 se trouvant situé légèrement, en dessous du niveau du bord supérieur de la paroi latérale 201 de la coque 20. Ainsi, la paroi latérale 201 de la coque 20 ne se trouve pas dans le champ de projection CP du vidéoprojecteur 11. Dans une autre variante, le plateau 31 pourrait se trouver positionné à proximité également du bord supérieur de la paroi latérale 201 de la coque 20 mais en étant situé en dehors de la coque 20, c'est-à-dire dans un plan situé à proximité et au dessus du niveau du bord supérieur de la paroi latérale 201 de la coque 20.

De manière avantageuse selon l'invention, le socle 3 peut être utilisé avec différents formats ou différents modèles de mallette 2, la seule contrainte étant que l'embase 30 du socle puisse être posée au contact de la face interne 200a de la paroi de fond 200 de la coque de rangement 20 et que la coque de rangement 20 puisse être fermée par l'autre partie 21 de la mallette une fois le socle 3 posé dans la coque de rangement 20 (figure 3). Ainsi un même socle 3 peut être utilisé avec différents modèles et/ou tailles de mallette 2.

De manière avantageuse également selon l'invention, les socles 3 et les mallettes 2 peuvent facilement être fabriquées séparément sur des sites de productions différents et être ensuite facilement assemblés.

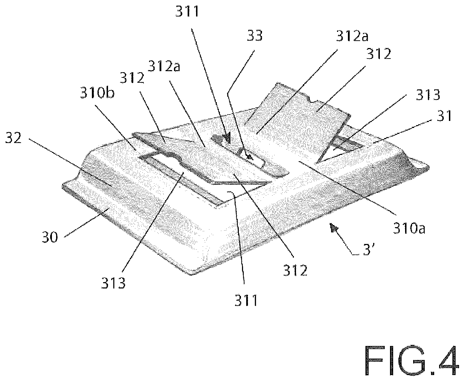

On a représenté sur la figure 4 une autre variante de réalisation d'un socle 3' conforme à l'invention. Ce socle 3' se différencie du socle 3 de la figure 1 principalement par la mise en oeuvre dans chaque support plan 310a et 310b du plateau 31 d'une ouverture 313 fermée par une trappe d'accès 312. Plus particulièrement, l'ouverture 313 et la trappe d'accès 312 sont réalisées par simple découpe du plateau 31 et la trappe d'accès 312 est solidaire du support plan correspondant du plateau 31 sur un de ses cotés faisant office de charnière 312a. Ces trappes d'accès 312 permettent d'accéder sous le plateau 31 sans devoir retirer le socle 3' de la mallette 2, et sont utilisées par exemple pour positionner des accessoires sous le plateau 31 tel que par exemple la source d'alimentation 12 et différents câbles d'alimentation ou de connexion.

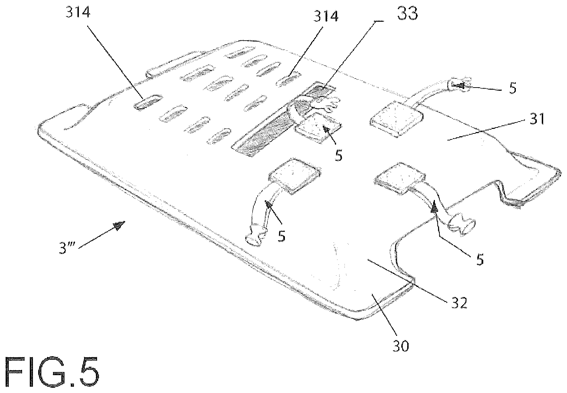

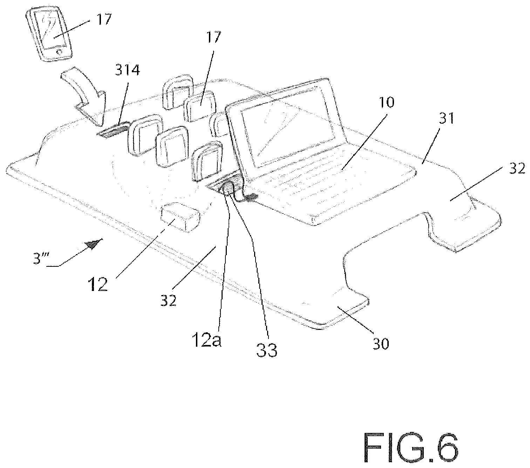

On a représenté sur les figures 5 et 6 une autre variante de réalisation d'un socle 3'" dont le plateau 31 comporte une pluralité de lumières ou fentes de rangement 314 permettant l'insertion dans le plateau 31 d'éléments multimédia individuels 17 de type tablette numériques, PDA ou téléphones, qui sont aptes à communiquer à distance et sans fil avec un microordinateur portable 10 posé sur le plateau 31.

En référence à la figure 5, le socle 3'" comporte également des moyens 5, en l'espèce sous la forme de quatre sangles, permettant d'attacher un microordinateur portable 10 au socle 3'" pendant le transport de l'équipement multimédia dans la mallette 2. Par souci de simplification, sur la figure 6, ces sangles 5 n'ont pas été représentées.

Quelle se soit la variante de réalisation du socle 3, 3', 3" ou 3"', celui-ci permet avantageusement d'absorber les chocs dans toutes les directions, et d'éviter une transmission mécanique trop importante des chocs aux éléments supportés par le socle.

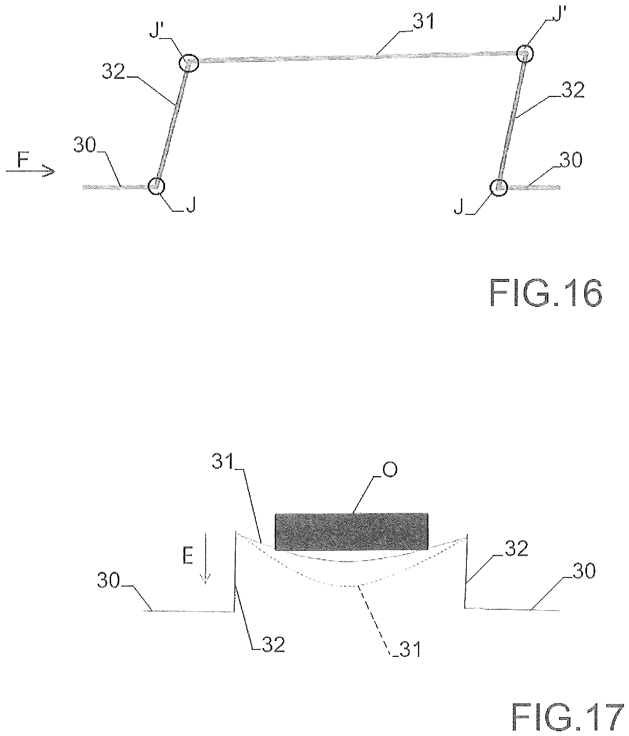

En particulier, en référence notamment à la figure 16, la jonction J entre la paroi latérale 32 et l'embase 30 et la jonction J'entre la paroi latérale 32 et le plateau 31 sont élastiquement déformables de manière à absorber les chocs latéraux (flèche F), c'est à dire les chocs ayant une composante principale dans un plan parallèle au plateau 31.

En référence notamment à la figure 17, le plateau 31 est élastiquement déformable sous l'effet d'une contrainte mécanique verticale, telle qu'un choc (flèche E), appliquée perpendiculairement au plateau, de manière à permettre une suspension élastique d'un objet O posé sur le plateau. Sur la figure 17, la déformation élastique maximale du plateau 31 est représentée en pointillés, et est typiquement de 1 à 2 cm. En cas de choc, l'objet O qui est élastiquement suspendu oscille dans la zone de déformation élastique du plateau 31, et une partie de l'énergie du choc est absorbée par la déformation élastique plateau 31.

Plus particulièrement, la pièce monobloc du socle 3, 3', 3" ou 3'" déformable élastiquement peut avantageusement être réalisée dans une matière présentant un module de Young compris entre 0,001 GPa et 0,1 GPa, et de préférence entre 0,015 GPa et 0,08 GPa, de manière à lui conférer la souplesse requise pour une bonne absorption des chocs.

La pièce monobloc du socle 3, 3', 3" ou 3'" peut notamment être dans une matière plastique du type éthylène-acétate de vinyle (EVA) ou être en élastomère. Dans un exemple précis de réalisation, non limitatif de l'invention, la pièce monobloc du socle 3, 3', 3" ou 3'" était en EVA et l'épaisseur de la paroi latérale 32 et l'épaisseur du plateau 31 étaient comprises entre 2 mm et 6 mm.

Il convient de noter que la mise en oeuvre de sangle de fixation 5 pour fixer les éléments (micro-ordinateur portable 10, ...) sur le socle contribue également à une meilleure absorption des chocs, du fait du jeu dans la fixation et de l'élasticité des sangles 5.

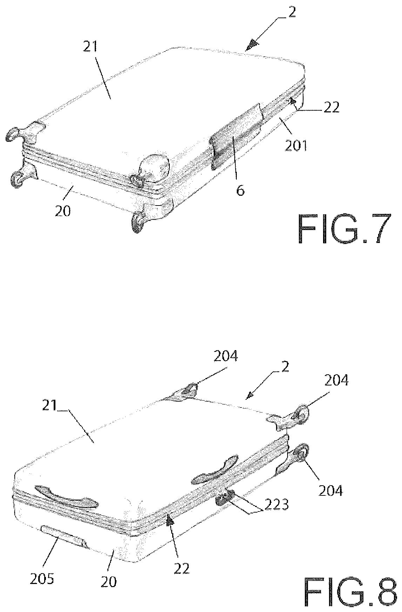

On a représenté sur les figures 7 et 8 un exemple de mallette 2 dont les deux parties 20 et 21 sont conçues pour être solidarisées entre elles à l'aide de moyens de solidarisation 22 de type fermetures à glissière.

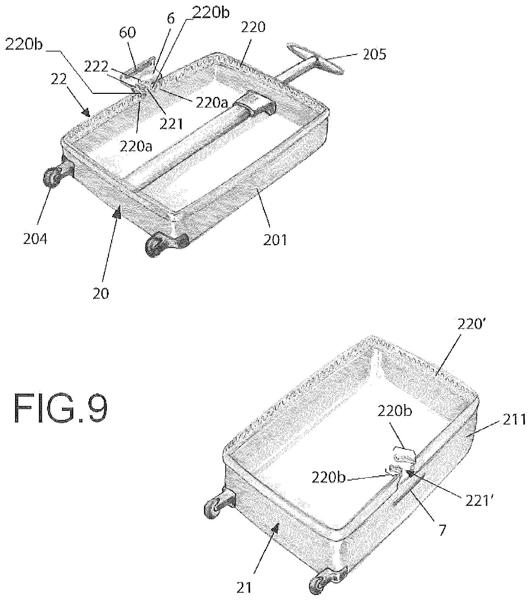

De préférence, les moyens de solidarisation 22 sont conçus de telle sorte que les deux parties 20 et 21 de la de mallette 2 peuvent être totalement désolidarisées l'une de l'autre, tel qu'illustré sur la figure 9.

Plus particulièrement, en référence à la figure 9, la partie 20 de la mallette 2 formant la coque de rangement comporte une première bande de fermeture à glissière 220, qui est fixée au niveau du bord supérieur de la paroi latérale 201 de la coque 20, et qui s'étend sur quasiment sur toute la périphérie de la coque 20 à l'exception d'une portion 221 de faible longueur. Cette première bande de fermeture à glissière 220 comporte à ses deux extrémités libres 220a deux butées 222 formant des butées d'arrêt pour les curseurs 223 (figure 8) de la fermeture à glissière.

L'autre partie 21 de la mallette 2 formant couvercle comporte une deuxième bande de fermeture à glissière 220' complémentaire de la première bande de fermeture à glissière 220. Cette deuxième bande de fermeture à glissière 220' est fixée au niveau du bord supérieur de la paroi latérale 211 de la partie 21, et s'étend sur quasiment sur toute la périphérie de la partie 21 à l'exception d'une portion 221' de faible longueur. Cette deuxième bande de fermeture à glissière 220' est apte à coopérer avec la première bande de fermeture à glissière 220 sous l'action du ou des curseurs 223 qui sont déplaçable le long des bandes de fermeture à glissière pour solidariser ensemble les deux parties 20 et 21 de la mallette 2 sur quasiment toute la périphérie de la mallette à l'exception des portions libres 221, 221' de faible longueur exemptes de fermeture à glissière.

En référence à la figure 9, au niveau d'au moins une de leurs deux extrémités, et de préférence tel qu'illustré au niveau de chacune de leurs deux extrémités, la première bande de fermeture à glissière 220 et la deuxième bande de fermeture à glissière 220' comportent une portion extrémale 220b de faible longueur, qui est libre et n'est pas fixée à la partie 21 de la mallette. Cette portion extrémale 220b permet de saisir les deux bandes de fermeture à glissière 220, 220' afin de pouvoir les positionner l'une par rapport à l'autre lors de l'opération de fermeture de la mallette.

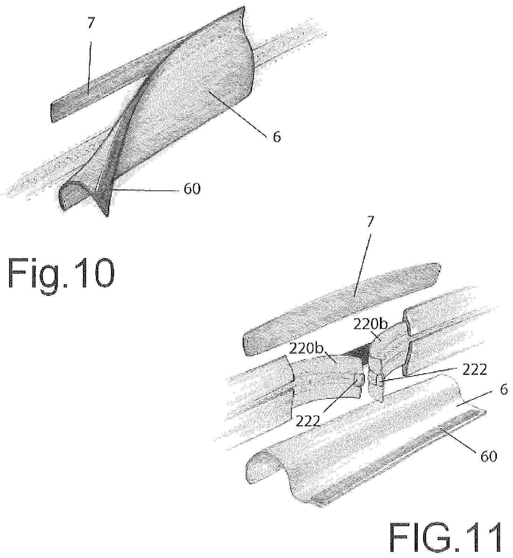

En référence aux figures 7, 9 et 10, la coque 20 de la mallette comporte une pièce de liaison souple 6, de type par exemple pièce en cuir ou pièce textile, qui est fixée, par exemple en étant cousue, sur la face externe de la paroi latérale 201 de la coque 20, au niveau de la portion libre 221 exempte de fermeture à glissière et située entre les deux extrémités 220a de la première bande de fermeture à glissière 220. Cette pièce de liaison souple 6 comporte une bande d'attache 60 de type VELCRO® apte à coopérer avec une bande d'attache 7 de type VELCRO® (figure 10) qui est fixée, par exemple en étant cousue, sur l'autre partie 21 de la mallette 2. Lorsque cette pièce de liaison 6 est attachée avec la bande 7, elle fait office de liaison charnière entre les deux parties 20 et 21 de la mallette 2. Lorsque pièce de liaison 6 est complètement désolidarisée de la bande 7, et que les deux bandes de fermetures à glissières 220 et 220' sont complètement désolidarisées l'une de l'autre, les deux parties 20 et 21 de la mallette 2 sont totalement désolidarisées l'une de l'autre, ce qui facilite avantageusement la mise en oeuvre de l'équipement multimédia supporté par le socle 3, 3', 3"ou 3"'et permet le cas échéant d'utiliser l'équipement multimédia en posant la partie 20 de la mallette 2 sur une table de plus petite dimension.

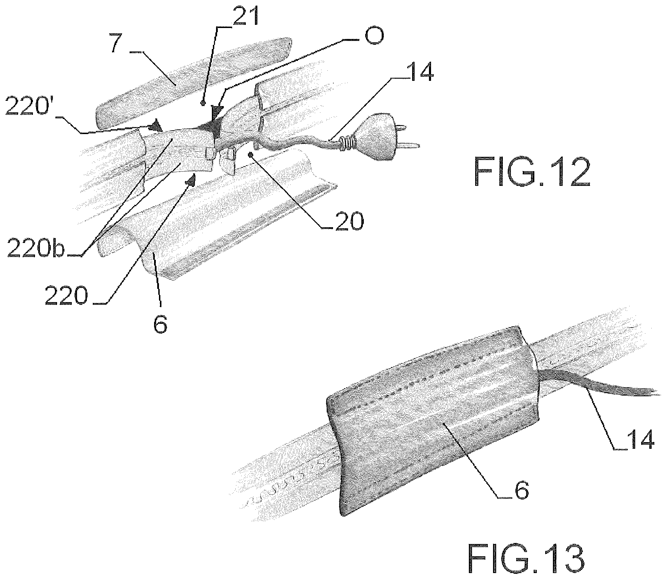

En référence aux figures 12 et 13, lorsque la mallette 2 est fermée (partie 21 positionnée sur la partie 20 et fermeture à glissière 220, 200' fermée), il subsiste entre les deux parties 20 et 21 de la mallette 12 une ouverture O qui peut avantageusement être utilisée pour le passage d'un câble d'alimentation électrique, tel que la rallonge électrique 14 précitée. Les éléments de l'équipement multimédia peuvent ainsi avantageusement être alimentées électriquement même lorsque mallette 2 est fermée. Cette possibilité d'alimentation électrique des éléments de l'équipement multimédia alors que la valise est fermée est plus particulièrement utile lorsque l'équipement multimédia comporte des éléments rechargeable qui doivent être rechargés régulièrement comme dans le cas de la figure 6.

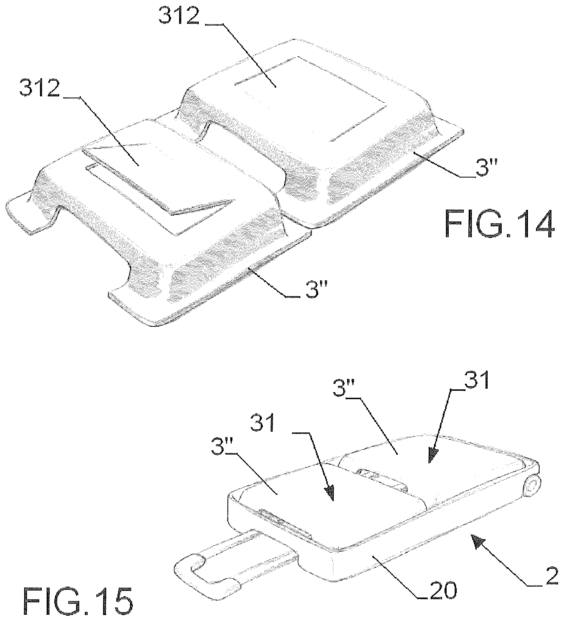

Dans la variante des figures 14 et 15, la structure de l'invention comporte deux socles 3" pouvant être fixé de manière amovible dans la partie 20 de la mallette 2.

## Revendications

1. Structure pour le transport et l'utilisation d'un équipement portable multimédia, ladite structure comportant d'une part une mallette (2) comprenant deux parties (20, 21), l'une au moins des deux parties formant une coque de rangement (20) qui comporte une paroi de fond (200) entourée sur toute sa périphérie par une paroi latérale (201), la face interne (200a) de la paroi de fond et ladite paroi latérale (201) délimitant un volume de rangement, l'autre partie de la mallette formant un couvercle (21) positionnable en position fermée sur la paroi latérale (201) de la coque de rangement (20) de manière à fermer le volume de rangement de la coque de rangement, et d'autre part au moins un socle (3 ; 3' ; 3" ; 3"') rapporté comportant une embase (30) et un plateau (31) qui est surélevé par rapport à l'embase de manière à ménager un volume de rangement sous le plateau, le socle étant dimensionné de telle sorte que son embase (30) peut être posée au contact de la face interne (200a) de la paroi de fond (200) de la coque de rangement et que la coque de rangement (20) peut être fermée par l'autre partie (21) de la mallette formant couvercle, une fois le socle positionné dans la coque de rangement (20).

2. Structure selon la revendication 1, dans laquelle le socle (3 ; 3' ; 3" ; 3"') comporte au moins une ouverture (33) pour le passage d'une ou plusieurs liaisons filaires à travers le plateau (31).

3. Structure selon l'une quelconque des revendications 1 ou 2, dans laquelle l'embase (30) est prolongée sur sa périphérie par une paroi latérale (32) qui est orientée sensiblement transversalement à l'embase (30), et qui se prolonge par le plateau (31), ladite paroi latérale (32) raccordant le plateau (31) à l'embase (30) sur la périphérie du plateau (31).

4. Structure selon l'une quelconque des revendications 1 à 3, dans laquelle le plateau (31) comporte une pluralité de fentes de rangement (314) permettant l'insertion dans le plateau (31) d'éléments multimédia (17) du type tablettes numériques.

5. Structure selon l'une quelconque des revendications 1 à 4, dans laquelle ledit au moins un socle (3 ; 3' ; 3" ; 3"') comporte une pièce monobloc formant au moins ladite l'embase (30) et le plateau (31), et le cas échéant ladite paroi latérale (32) du socle et/ou dans laquelle le socle (3 ; 3' ; 3" ; 3"') comporte une pièce moulée en plastique ou en élastomère formant au moins ladite l'embase (30) et le plateau (31), et le cas échéant ladite paroi latérale (32) du socle.

6. Structure selon l'une quelconque des revendications 1 à 5, comportant en outre des moyens de fixation (4a, 4b) permettant de fixer de manière amovible le socle (3) dans la coque de rangement (20).

7. Structure selon l'une quelconque des revendications 1 à 6, dans laquelle les deux parties (20, 21) de la mallette (20) sont désolidarisables complètement l'une de l'autre.

8. Structure selon la revendication 7, dans laquelle les deux parties (20, 21) de la mallette (20) comportent des moyens de fermeture (22) permettant de solidariser en position fermée la partie (21) de la mallette formant couvercle avec la partie (20) de la mallette formant coque de rangement, dans laquelle les moyens de fermeture (22) de la mallette comportent une fermeture à glissière, dans laquelle la fermeture à glissière (22) comporte une première bande de fermeture à glissière (220), qui est fixée au niveau du bord supérieur de la paroi latérale (201) de la coque de rangement (20)sur quasiment sur toute la périphérie de la coque de rangement (20), à l'exception d'une portion (221) de faible longueur, dans laquelle l'autre partie (21) de la mallette formant couvercle comporte une deuxième bande de fermeture à glissière (220') qui est complémentaire de la première bande de fermeture à glissière (220), qui est fixée au niveau du bord supérieur de la paroi latérale (211) de la partie (21) formant couvercle sur quasiment toute la périphérie de la partie (21) formant couvercle, à l'exception d'une portion (221') de faible longueur et au moins un curseur (223) mobile le long des bandes de fermeture à glissière de manière à solidariser ensemble ou à désolidariser les deux bandes de fermeture à glissière (220, 220').

9. Structure selon la revendication 8, dans laquelle les deux bandes de fermeture à glissière (220, 220') comportent au niveau d'au moins une de leurs deux extrémités, et de préférence au niveau de chacune de leurs deux extrémités, une portion extrémale (220b) de faible longueur, qui est libre et n'est pas fixée à la partie correspondante (21) de la mallette.

10. Structure selon l'une quelconque des revendications 1 à 9, dans laquelle la mallette (2) est conçue de telle sorte qu'une fois la mallette fermée, il subsiste une ouverture (O) entre les deux parties (20, 21) de la mallette pour le passage d'un câble d'alimentation électrique (14).

11. Structure selon l'une quelconque des revendications 1 à 10, dans laquelle l'embase (30) est prolongée sur sa périphérie par une paroi latérale (32) qui est orientée sensiblement transversalement à l'embase (30), et qui se prolonge par le plateau (31), ladite paroi latérale (32) du socle raccordant le plateau (31) à l'embase (30) sur la périphérie du plateau (31), la jonction entre la paroi latérale (32) du socle et l'embase (30) et la jonction entre la paroi latérale (32) du socle et le plateau (31) étant élastiquement déformables de manière à absorber les chocs latéraux.

12. Structure selon l'une quelconque des revendications 1 à 11, dans laquelle le plateau (31) est élastiquement déformable sous l'effet d'une contrainte mécanique appliquée perpendiculairement au plateau, de manière à permettre une suspension élastique d'un objet posé sur le plateau.

13. Structure selon l'une quelconque des revendications 1 à 12, dans laquelle le socle (3 ; 3' ; 3" ; 3"') comporte une pièce monobloc réalisée dans un matériau présentant un module de Young compris entre 0,001 GPa et 0,1 GPa, et de préférence entre 0,015 GPa et 0,08 GPa.

14. Ensemble comportant un équipement multimédia et une structure pour le transport et l'utilisation de cet équipement portable multimédia, ladite structure étant celle visée à l'une quelconque des revendications 1 à 13, ensemble dans lequel le socle de la structure est positionné et est fixé dans la coque de rangement (20) de la mallette, et dans lequel l'équipement multimédia comporte une unité centrale informatique (10) de type microordinateur portable, qui est posée sur le plateau (31) du socle et un ou plusieurs périphériques (11, 17) qui sont supportés par le socle.

15. Ensemble selon la revendication 14, dans lequel l'unité centrale informatique (10) est connectée à travers le plateau (31) à une source d'alimentation électrique (12) positionnée sous le plateau (31) du socle, et/ou dans lequel l'un des périphériques est un vidéoprojecteur (11) qui est posé sur le plateau (31) du socle, et qui est de préférence connecté à l'unité centrale informatique (10), et/ou dans lequel au moins une partie des périphériques est constitué d'éléments multimédia individuels (17) de type tablettes numériques ou téléphones, qui sont aptes à communiquer à distance et sans fil avec l'unité centrale informatique (10).

## Patentansprüche

1. Struktur zum Transportieren und Nutzen von tragbaren Multimedia-Geräten, wobei die Struktur einerseits ein Gehäuse (2) mit zwei Teilen (20, 21) umfasst, wobei mindestens eines der beiden Teile eine Aufbewahrungsschale (20) bildet, die eine Bodenwand (200) umfasst, die über ihren gesamten Umfang von einer Seitenwand (201) umgeben ist, wobei die Innenfläche (200a) der Bodenwand und der Seitenwand (201) ein Aufbewahrungsvolumen definiert, wobei der andere Teil des Gehäuses eine Abdeckung (21) bildet, die in einer geschlossenen Position auf der Seitenwand (201) der Aufbewahrungsschale (20) positioniert werden kann, um das Aufbewahrungsvolumen der Aufbewahrungsschale zu schließen, und andererseits mindestens einen zugehörigen Sockel (3; 3'; 3"; 3''') umfasst, umfassend eine Basis (30) und ein Plateau (31), das in Bezug auf die Basis erhöht angeordnet ist, um Stauraum unter dem Plateau bereitzustellen, wobei der Sockel so bemessen ist, dass seine Basis (30) mit der Innenseite (200a) der Bodenwand (200) der Aufbewahrungsschale in Kontakt gebracht werden kann und dass Aufbewahrungsschale (20) durch den anderen Teil (21) des Gehäuses geschlossen werden kann, sobald der Sockel in der Aufbewahrungsschale (20) positioniert ist.

2. Struktur nach Anspruch 1, wobei die Basis (3; 3'; 3"; 3''') mindestens eine Öffnung (33) für die Durchführung von einer oder mehreren Drahtverbindungen durch das Plateau (31) aufweist.

3. Struktur nach einem der Ansprüche 1 oder 2, wobei die Basis (30) an ihrem Umfang durch eine Seitenwand (32) fortgesetzt wird, die im Wesentlichen schräg zur Basis (30) ausgerichtet ist, wobei am Umfang des Plateaus (31) die Seitenwand (32) das Plateau (31) mit der Basis (30) verbindet.

4. Struktur nach einem der Ansprüche 1 bis 3, wobei die Schale (31) eine Vielzahl von Aufbewahrungsschlitzen (314) zum Einsetzen von Multimediaelementen (17) vom Typ eines Tablet-Computers in die Schale (31) aufweist.

5. Struktur nach einem der Ansprüche 1 bis 4, wobei der mindestens eine Sockel (3; 3'; 3''; 3''') ein einteiliges Bauteil umfasst, das wenigstens die Basis (30) und das Plateau (31) bildet, und gegebenenfalls die Seitenwand (32) der Basis und/oder der Sockel (3; 3'; 3''; 3''') ein Kunststoff- oder Elastomerformteil aufweist, das wenigstens die Basis (30) und das Plateau (31) und gegebenenfalls die Seitenwand (32) des Sockels bildet.

6. Struktur nach einem der Ansprüche 1 bis 5, ferner umfassend Befestigungsmittel (4a, 4b) zum lösbaren Befestigen des Sockels (3) in der Aufbewahrungsschale (20).

7. Struktur nach einem der Ansprüche 1 bis 6, bei der die beiden Teile (20, 21) des Gehäuses (20) vollständig voneinander trennbar sind.

8. Struktur nach Anspruch 7, in der die beiden Teile (20, 21) des Gehäuses (20) ein Verriegelungsmittel (22) zum Befestigen des den Deckel bildenden Teils (21) an dem den Aufbewahrungsbehälter bildenden Teil (20) in der geschlossenen Position aufweisen, worin das Verriegelungsmittel (22) des Gehäuses einen Reißverschluss aufweist, wobei der Reißverschluss (22) einen ersten Reißverschlussstreifen (220) aufweist, der mit Ausnahme eines kurzen Abschnitts (221) am oberen Rand der Seitenwand (201) der Aufbewahrungsschale (20) über im Wesentlichen den gesamten Umfang der Aufbewahrungsschale (20) befestigt ist, wobei der andere, den Deckel des Gehäuses bildende Teil (21) einen zweiten Reißverschlussstreifen (220') aufweist, der komplementär zum ersten Reißverschlussstreifen (220) ist, der mit Ausnahme eines Abschnitts (221') von geringer Länge über im Wesentlichen den gesamten Umfang des Deckteils (21) am oberen Rand der Seitenwand (211) des Deckteils (21) befestigt ist, und mindestens eines Schiebers (223), der entlang der Reißverschlussstreifen beweglich ist, um die beiden Reißverschlussstreifen (220, 220') zu verbinden oder zu trennen.

9. Struktur nach Anspruch 8, worin die beiden Reißverschlussstreifen (220, 220') an mindestens einem ihrer beiden Enden und vorzugsweise an jedem ihrer beiden Enden einen Endabschnitt (220b) von kurzer Länge aufweisen, der frei und nicht an dem entsprechenden Teil (21) des Gehäuses befestigt ist.

10. Struktur nach einem der Ansprüche 1 bis 9, wobei das Gehäuse (2) so ausgebildet ist, dass nach dem Schließen des Gehäuses eine Öffnung (0) zwischen den beiden Teilen (20, 21) des Gehäuses für den Durchgang eines Stromversorgungskabels (14) verbleibt.

11. Struktur nach einem der Ansprüche 1 bis 10, bei der sich die Basis (30) an ihrem Umfang in eine Seitenwand (32) fortsetzt, die im Wesentlichen schräg zur Basis (30) ausgerichtet ist und die in das Plateau (31) übergeht, wobei die Seitenwand (32) des Sockels das Plateau (31) am Umfang des Plateaus (31) mit der Basis (30) verbindet, wobei der Übergang zwischen der Seitenwand (32) des Sockels und der Basis (30) und der Übergang zwischen der Seitenwand (32) der Basis und dem Plateau (31) elastisch verformbar sind, um Seitenaufpralle zu absorbieren.

12. Struktur nach einem der Ansprüche 1 bis 11, in der das Plateau (31) unter der Wirkung von senkrecht zur Platte aufgebrachter mechanischer Beanspruchung elastisch verformbar ist, um eine elastische Lagerung eines auf dem Plateau angeordneten Objekts zu ermöglichen.

13. Struktur nach einem der Ansprüche 1 bis 12, wobei die Basis (3; 3'; 3''; 3''') ein einteiliges Bauteil aus einem Material mit einem Young-Modul zwischen 0,001 GPa und 0,1 GPa und vorzugsweise zwischen 0,015 GPa und 0,08 GPa umfasst.

14. Anordnung, umfassend eine Multimediaausrüstung und eine Struktur für den Transport die Nutzung der tragbaren Multimediaausrüstung, wobei die Struktur eine solche ist, auf die sich einer der Ansprüche 1 bis 13 bezieht, in der die Basis der Struktur in der Aufbewahrungsschale (20) des Gehäuses positioniert und befestigt ist, und in der die Multimediaausrüstung eine tragbare zentrale Computereinheit (10) vom Mikrocomputertyp umfasst, die auf dem Plateau (31) des Sockels angeordnet ist, und eine oder mehrere Peripheriegeräte (11, 17), die von dem Sockel getragen werden.

15. Anordnung nach Anspruch 14, wobei die zentrale Computereinheit (10) durch das Plateau (31) hindurch mit einer Stromversorgungsquelle (12) verbunden ist, die unter dem Plateau (31) des Sockels angeordnet ist, und/oder wobei eines der Peripheriegeräte ein Videoprojektor (11) ist, der auf dem Plateau (31) des Sockels angeordnet ist, und der vorzugsweise mit der zentralen Computereinheit (10) verbunden ist, und/oder bei der zumindest ein Teil der Peripheriegeräte aus einzelnen Multimedia-Elementen (17) vom Typ eines digitalen Tablets oder Telefons besteht, die in der Lage sind, ferngesteuert und drahtlos mit der zentralen Computereinheit (10) zu kommunizieren.

## Claims

1. A structure for the transport and use of portable multimedia equipment, the structure comprising, on the one hand, a case (2) comprising two parts (20, 21), at least one of the two parts forming a storage shell (20) that comprises a bottom wall (200) surrounded on its entire periphery by a side wall (201), the inner face (200a) of the bottom wall and the side wall (201) delimiting a storage space, the other portion of the case forming a cover (21) that can be positioned in the closed position on the side wall (201) of the storage shell (20) so as to close the storage space of the storage shell and, on the other hand, at least one add-on base (3; 3'; 3"; 3"') comprising a bottom portion (30) and a top platform (31) that is raised relative to the bottom portion so as to provide a storage space under the top platform, the base being dimensioned such that its bottom portion (30) can be placed in contact with the inner face (200a) of the bottom wall (200) of the storage shell and that the storage shell (20) can be closed by the other cover-forming part (21) of the case once the base is positioned in the storage shell (20).

2. The structure as set forth in claim 1, wherein the base (3; 3'; 3"; 3"') comprises at least one opening (33) for the passage of one or more wire leads through the top platform (31).

3. The structure as set forth in any one of claims 1 or 2, wherein the bottom portion (30) is extended on its periphery by a side wall (32) that is oriented substantially transversely to the bottom portion (30) and that is extended by the top platform (31), the side wall (32) connecting the top platform (31) to the bottom portion (30) on the periphery of the top platform (31).

4. The structure as set forth in any one of claims 1 to 3, wherein the top platform (31) has a plurality of storage slots (314) for inserting digital tablet-type multimedia elements (17) into the top platform (31).

5. The structure as set forth in any one of claims 1 to 4, wherein the at least one base (3; 3'; 3"; 3"') comprises a one-piece part forming at least the bottom portion (30) and the top platform (31) and, as appropriate, the side wall (32) of the base and/or in which the base (3; 3'; 3"; 3"') comprises a molded part made of plastic or elastomer forming at least the bottom portion (30) and the top platform (31), and optionally the side wall (32) of the base.

6. The structure as set forth in any one of claims 1 to 5, further comprising fixing means (4a, 4b) for releasably fixing the base (3) in the storage shell (20).

7. The structure as set forth in any one of claims 1 to 6, wherein the two parts (20, 21) of the case (20) are completely detachable from one another.

8. The structure as set forth in claim 7, wherein the two parts (20, 21) of the case (20) comprise closure means (22) that enable the cover-forming part (21) of the case to be secured in a closed position with the part (20) of the case forming the storage shell, wherein the closure means (22) of the case comprise a slide fastener, the slide fastener (22) having a first slide fastener strip (220) that is attached to the upper edge of the side wall (201) of the storage shell (20) over substantially the entire periphery of the storage shell (20), with the exception of a portion (221) of short length, wherein the other cover-forming part (21) of the case comprises a second slide fastener strip (220') that is complementary to the first slide fastener strip (220) that is attached to the upper edge of the side wall (211) of the cover-forming part (21) over substantially the entire periphery of the cover-forming part (21), with the exception of a portion (221') of short length and at least one slider (223) that can be moved along the slide fastener strips so as to secure together or separate the two slide fastener strips (220, 220').

9. The structure as set forth in claim 8, wherein the two slide fastener strips (220, 220') comprise, at least at one of their two ends, and preferably at each of their two ends, an end portion (220b) of short length that is free and not attached to the corresponding part (21) of the case.

10. The structure as set forth in any one of claims 1 to 9, wherein the case (2) is embodied such that, once the case is closed, an opening (O) remains between the two parts (20, 21) of the case for the passage of a power supply cable (14).

11. The structure as set forth in any one of claims 1 to 10, wherein the bottom portion (30) is extended on its periphery by a side wall (32) that is oriented substantially transversely to the bottom portion (30) and is extended by the top platform (31), the side wall (32) of the base connecting the top platform (31) to the bottom portion (30) on the periphery of the top platform (31), the junction between the side wall (32) of the base and the bottom portion (30) and the junction between the side wall (32) of the base and the top platform (31) being elastically deformable so as to absorb lateral impacts.

12. The structure as set forth in any one of claims 1 to 11, wherein the top platform (31) is elastically deformable under the effect of a mechanical stress applied perpendicularly to the top platform so as to enable an object placed on the top platform to be elastically suspended.

13. The structure as set forth in any one of claims 1 to 12, wherein the base (3; 3'; 3"; 3") comprises a one-piece part made of a material having a Young's modulus of between 0.001 GPa and 0.1 GPa and preferably between 0.015 GPa and 0.08 GPa.

14. An assembly comprising multimedia equipment and a structure for the transport and use of this portable multimedia equipment as set forth in any one of claims 1 to 13, wherein the base of the structure is positioned and fixed in the storage shell (20) of the case, and wherein the multimedia equipment comprises a computer central processing unit (10) of the portable microcomputer type that is placed on the top platform (31) of the base and one or more peripherals (11, 17) that are supported by the base.

15. The assembly as set forth in claim 14, wherein the computer central processing unit (10) is connected via the top platform (31) to an electrical power supply (12) positioned under the top platform (31) of the base, and/or wherein one of the peripherals is a video projector (11) that is placed on the top platform (31) of the base and preferably connected to the computer central processing unit (10), and/or wherein at least a portion of the peripherals consists of individual computer tablet-type or telephone-type multimedia elements (17) that are able to communicate remotely and wirelessly with the computer central processing unit (10).
